Europäisches Patentamt

(19) European Patent Office

Office européen des brevets

(11) Numéro de publication: **0 147 294**
**B1**

(12) **FASCICULE DE BREVET EUROPEEN**

(45) Date de publication du fascicule du brevet: **26.10.88**

(51) Int. Cl.⁴: **G 01 B 7/14, G 01 B 7/02**

(21) Numéro de dépôt: **84402588.2**

(22) Date de dépôt: **13.12.84**

(54) **Appareil et procédé de mesure dynamique et sans contact de faibles distances.**

(30) Priorité: **14.12.83 CA 443276**

(43) Date de publication de la demande:
**03.07.85 Bulletin 85/27**

(45) Mention de la délivrance du brevet:
**26.10.88 Bulletin 88/43**

(84) Etats contractants désignés:
**AT BE CH DE FR GB IT LI LU NL SE**

(56) Documents cités:
**FR-A-2 496 871**
**GB-A-2 023 847**
**GB-A-2 131 176**
**US-A-3 986 109**

**PATENTS ABSTRACTS OF JAPAN, vol. 7, no.
290 (P-245) 1435r, 24 décembre 1983**

(73) Titulaire: **HYDRO-QUEBEC**
**75, Boulevard Dorchester Ouest**
**Montréal Québec H2Z 1E4 (CA)**

(72) Inventeur: **Lalonde, François**
**140 Malo**
**Varennes Que JOL 2PO (CA)**
Inventeur: **Bourgeois, Jean-Parc**
**2843 Berthon**
**Longueuil Que (CA)**
Inventeur: **Cloutier, Marius**
**568 De Bienville**
**Boucherville Que (CA)**

(74) Mandataire: **Martinet & Lapoux**
**62, rue des Mathurins**
**F-75008 Paris (FR)**

EP 0 147 294 B1

## Description

La présente invention a pour objet un appareil ainsi qu'un procédé de mesure dynamique et sans contact de la distance séparant la surface d'une première pièce de la surface d'au moins une seconde pièce conductrice faiblement espacée de la première.

L'invention a plus particulièrement pour objet un appareil ainsi qu'un procédé de mesure dynamique et sans contact de faibles distances, qui peuvent être avantageusement utilisés pour mesurer de façon permanente et relativement simple l'entrefer d'une machine tournante quelconque relle qu'une génératrice électrique ou hydroélectrique.

Il est bien connu des spécialistes que la mesure dynamique de l'entrefer d'une génératrice ne peut être faite que dans des situations exceptionnelles, étant donné que des moyens laborieux doivent être mis en oeuvre pour effectuer une telle mesure. La plupart des procédés connus utilisés pour mesurer l'entrefer font appel à des techniques photographiques et optiques qui demandent un espace relativement important pour l'installation du système de mesure. Ce besoin d'espace qui impose habituellement d'ouvrir la machine tournante ou la génératrice, fait que la mesure d'entrefer ne peut se faire que sporadiquement, sans possibilité de surveillance permanente bien qu'une telle surveillance serait extrêmement utile pour éviter, par exemple, les accrochages du rotor avec le stator dans le cas d'une génératrice.

Un autre procédé connu de mesure de l'entrefer fait appel à des capteurs de distance dont les principes de fonctionnement sont basés sur la mesure de courant de Foucault ou encore sur l'utilisation de l'effet Hall. De par leur principe de fonctionnement, ces types de capteurs se trouvent donc automatiquement perturbés par le champ magnétique. Il en résulte là encore que ces types de capteurs ne peuvent en aucun cas être utilisés pour mesurer l'entrefer dans des conditions normales de fonctionnement d'une génératrice électrique. En outre, ces types de capteurs voient souvent leur lecture modifiée par les laminations du métal, en plus d'être très mal adaptés pour l'installation directe dans l'entrefer d'une machine tournante.

La présente invention a pourbut de fournir un appareil ainsi qu'un procédé de mesure de la distance séparant la surface d'une première pièce, qui peut être conductrice ou non, de la surface d'une seconde pièce conductrice faiblement espacée de la première, lesquels appareil et procédé remédient complètement aux divers inconvénients ci-dessus mentionnés.

Plus précisément, la présente invention a pour objet un appareil ainsi qu'un procédé de mesure dynamique et sans contact de la distance séparant les surfaces d'une première pièce, qui peut être conductrice ou non, de la surface d'une seconde pièce conductrice faiblement espacée de la première, telles que le sont le stator et le rotor d'une génératrice électrique, lesquels appareil et procédé peuvent être utilisés de façon permanente sans modification importante ni encombrement excessif. Dans le cas particulier d'une génératrice électrique, l'appareil selon l'invention peut être installé à demeure et le procédé selon l'invention peut être mis en oeuvre à demeure pour une mesure permanente de l'entrefer sans modification importante de la génératrice ni encombrement excessif, et ce avec des résultats précis et fiable même en présence de champs magnétiques intenses et de variations de température.

L'appareil et le procédé selon l'invention donnent donc accès, de par leurs avantages, à l'étude de machines tournantes à partir d'une mesure d'entrefer, pour tous les modes de fonctionnement desdites machines.

A cette fin, l'appareil de mesure dymique et sans contact selon l'invention est tel que défini dans la revendication 1.

Tel qu'indiqué, l'appareil selon l'invention comprend des moyens pour détecter le courant électrique généré par le signal à haure fréquence entre la plaque de chaque capteur la plus proche de la seconde pièce conductrice et cette dernière. L'intensité i du courant ainsi détecté est, abstraction faite des courants parasites, donnée par l'équation suivante:

$$i = \omega C V$$

dans laquelle:
- $\omega = 2\eta\, f$, f étant la fréquence du signal émis;
- V est la différence de tension entre la plaque du capteur la plus proche de la surface de la seconde pièce conductrice et cette dernière; et
- C est la capacité de la plaque du capteur la plus proche de la surface de la seconde pièce conductrice et cette dernière, laquelle capacité est inversement proportionnelle à la distance linéaire séparant ladite plaque la plus proche de la surface de la seconde pièce conductrice et cette dernière.

Comme on peut aisément le contaster, plus la fréquence du signal alimentant le capteur et la tension seront élevés, plus l'intensité du courant généré sera élevé et facilement détectable.

En pratique, le signal utilisé pour générer le courant est de préférence choisie de façon à ce que sa fréquence soit comprise entre 100 kHz et 10 MHz. Si la fréquence du signal est inférieure à la plage de fréquence précitée, l'intensité du courant risque de devenir trop faible pour être facilement mesurable et il devient alors impposible de filtrer dans une bande passante pour mesurer les signaux dynamiquement. En outre, une fréquence trop basse risque d'occasionner des bruits dans le cas particulier des génératrices. Si la fréquence est par contre trop élevée et sort de la plage ci-dessus mentionnée, il peut se produire un problème de mesure, les amplificateurs permettant le traitement de signaux à haute fréquence devenant de plus en plus compliqués. De plus, une fréquence trop élevée risque de créer une impédance parasite de retour.

La tension appliquée aux plaques du capteur doit également être, théoriquement, la plus élevée possible pour générer un fort signal de courant. De préférence, on se limitera toutefois à une tension comprise entre 5 et 100 volts crête à crête car l'utilisation d'une tension trop élevée au dessus de 100 volts peut conduire à des problèmes importants d'isolation.

Quoi qu'il en soit, l'équation ci-dessus montre clairement que, pour un capteur donné, le courant détecté est, en première approximation, une fonction inverse de la distance séparant la plaque de chaque capteur la plus proche de la seconde pièce conductrice et cette dernière.

Avec une calibration adéquate faite lors de la construction du capteur pour tenir compte de la non-linéarité de celui-ci due par exemple à des courants parasites, on détermine la valeur de la distance entre le capteur et la seconde pièce conductrice en fonction de la valeur du courant électrique mesuré. Cette détermination tient compte des paramètres physiques de chaque type de capteur. La relation courant-distance est préprogrammé dans un ordinateur et sert à retrouver une distance à partir d'un courant mesuré lors de l'utilisation du capteur.

De préférence, les moyens pour détecter le courant généré par le signal à haute fréquence comprennent une faible impédance montée en série entre les moyens pour alimenter et la plaque du capteur la plus proche de la seconde pièce conductrice, et un circuit d'isolation relié à la faible impédance pour mesurer de façon isolée le signal de tension à haute fréquence aux bornes de celle-ci et pour extraite de ce signal mesuré un signal proportionnel au courant de mesure. Ce circuit d'isolation peut être par exemple composé d'un transformateur d'isolation, d'un amplificateur, d'un filtre et d'un démodulateur d'amplitude montés en série.

Comme on peut aisément le comprendre à la lecture de ce qui précède, le mode de fonctionnement du capteur utilisé dans l'appareil selon l'invention rend celui'ci indépendant du type de surface conductrice à mesurer. L'appareil selon l'invention est donc insensible aux laminations.

De plus, le capteur qui est constitué de deux plaques conductrices séparées l'une de l'autre par un isolant, peut être fabriqué de façon à avoir le plus faible encombrement possible. Ceci le rend facilement installable dans une machine tournante pour mesurer l'entrefer de celle-ci. De par sa structure, le capteur utilisé dans l'appareil selon l'invention peut être installé dans des machines existantes sans aucune modification de celles-ci.

En fait, l'application de l'appareil selon l'invention ne se limite pas aux génératrices électriques puisque cet appareil permet de mesurer la distance entre le capteur et n'importe quelle surface conductrice.

Le procédé de mesure dynamique et sans contact de la distance séparant la surface d'une première pièce de la surface d'une seconde pièce conductrice faiblement espacée de la première, est, selon l'invention, rel que caractérisé dans la revendication 17.

Là encore, ce procédé n'est absolument pas restreint aux génératrices électriques puisqu'il permet de mesurer la distance entre le capteur et n'importe quelle surface conductrice.

D'autres caractéristiques et avantages de l'invention apparaîtront plus clairement à la lecture de la description suivante de plusieurs réalisations préférées de l'invention en référence aux dessins annexés correspondants, dans lesquels;

- la Fig. 1 est un schéma de principe d'un appareil selon l'invention;
- la Fig. 2 est une vue de face de la surface d'un capteur utilisé, selon l'invention, pour la mesure de l'entrefer d'une génératrice électrique;
- la Fig. 3 représente une courbe donnant la valeur du courant mesuré en fonction de la distance séparant le capteur de la surface conductrice qui lui est opposée;
- la Fig. 4 est un schéma d'un circuit de mesure, détection et correction de dérive inclus dans l'appareil;
- la Fig. 5 est un bloc-diagramme montrant les principales fonctions de l'appareil;
- la Fig. 6 est un graphique de la forme de plusieurs pôles du rotor d'une génératrice électrique par rapport à un point du stator de cette même génératrice; et
- la Fig. 7 est un graphique montrant la distance minimale de chacun des pôles du rotor par rapport à un point du stator d'une génératrice électrique.

En se référant à la Fig.l des dessins annexés, l'appareil 1 de mesure dynamique et sans contact de faibles distances selon l'invention est destiné à mesurer la distance existant entre une surface 3 d'une première pièce conductrice ou non, qui peut être la aurface du stator d'une génératrice électrique, et une surface 5 d'au moins une seconde pièce conductrice faiblement espacée de la première. La seconde pièce qui doit être conductrice, peut être, par exemple, un pôle du rotor d'une génératrice électrique dans le cas où la pièce 3 est un stator. Il convient toutefois de préciser que l'appareil selon l'invention peut être utilisé indifféremment dans un sens ou dans l'autre, c'est-à-dire pour mesurer la distance séparant le rotor du stator d'une génératrice.

L'appareil 1 selon l'invention comprend au moina un capteur 7 constitué par deux plaques 9 et 11 qui sont conductrices, parallèles, superposées et isolées électriquement l'une de l'autre par un isolant approprié 13. Le capteur 7 est conçu pour être positionné à même la surface 3 de la première pièce de façon à ce que les deux plaques 9 et 11 soient parallèles à cette surface et isolées électriquement de celle-ci. Cette isolation peut être effectuée, tel qu'illustré, par l'isolant 13 déjà utilisé pour isoler électriquement les plaques 9 et II.

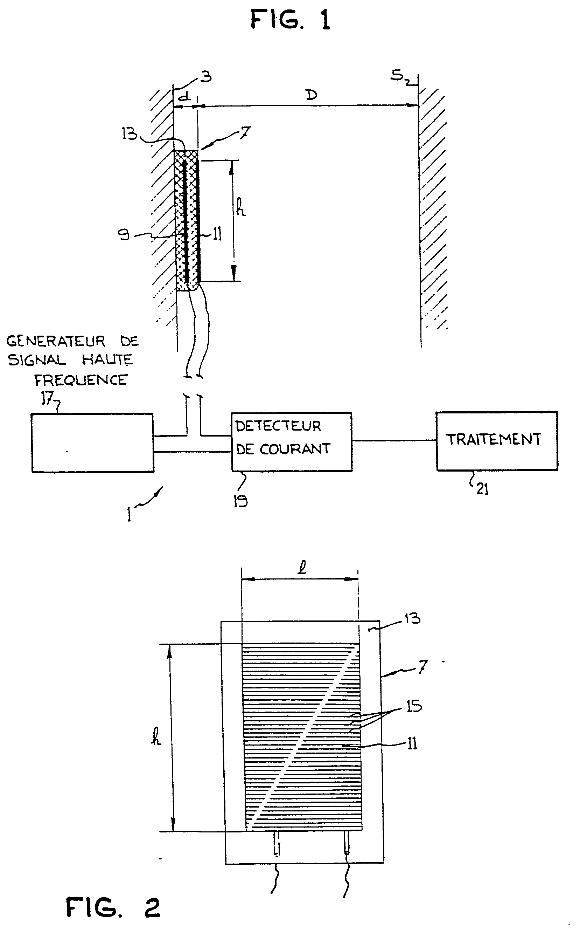

Le positionnement du capteur 7 à même la surface 3 peut s'effectuer par simple collage ou par tout autre moyen approprié. Lorsque le capteur 7 est destiné à être installé dans une génératrice électrique pour mesurer l'entrefer de celle-ci, il est avantageux de strier la surface des plaques 9 et 11 à l'aide de stries 15 telles qu'illustrées, par exemple, dans la Fig. 2, afin de réduire au maximum les courants de Foucault. De même, pour réduire au maximum les effets parasites, on peut "jouer" sur la dimension des plaques 9 et 11 en agrandissant l'une par rapport à l'autre, ou sur la distance les séparant. Pour chaque type de capteur, il convient toutefois d'établir la courbe de linéarisation qui devient disponible pour augmenter la précision des résultats.

L'appareil 1 de l'invention comprend également des moyens pour alimenter les deux plaques de chaque capteur avec un même signal à haute fréquence sous une même tension. Ces moyens peuvent être constitués par un générateur de signal à haute fréquence 17 opérant dans une plage comprise entre 100 kHz et 10 MHz sous une tension comprise entre 5 et 100 volts. Les essais effectués par les inventeurs avec des signaux de 455 kHz sous une tension de 10 volts crête à crête se sont avérés tout à fait satisfaisants.

L'appareil 1 selon l'invention comprend en outre des moyens 19 pour détecter en mode isolé le courant généré par le signal à haute fréquence entre la plaque 11 la plus proche de la surface 5 de la seconde pièce conductrice et cette dernière.

L'appareil 1 selon l'invention comprend enfin des moyens de traitement 21 pour déterminer la valeur de la distance d + D séparant la surface 3 de la surface 5 en fonction de la valeur du courant détecté.

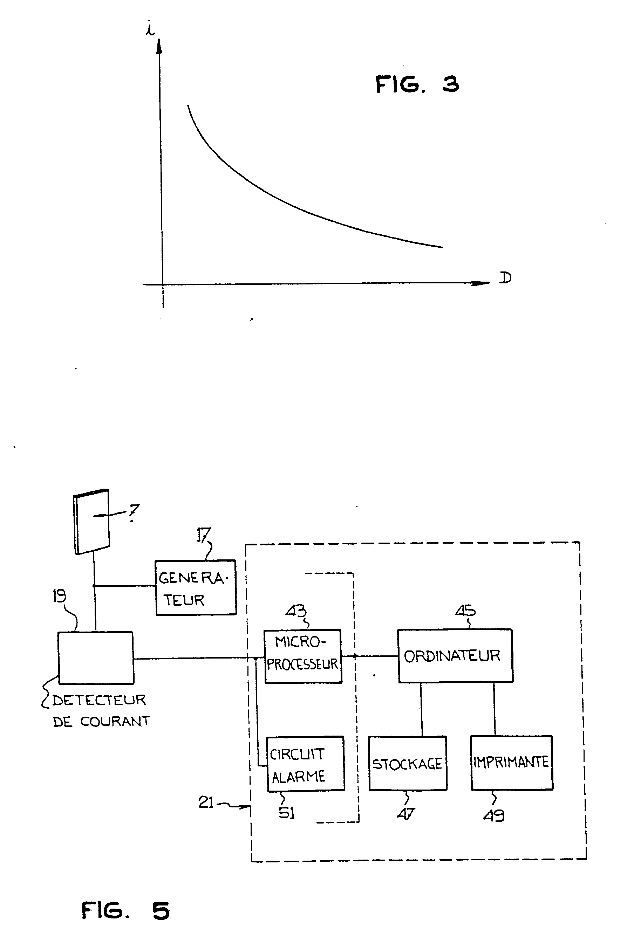

Tel qu'expliqué précédemment, la valeur du courant détecté varie en fonction inverse de la distance D séparant la surface 5 de la seconde pièce conductrice de la surface de la plaque 11 du capteur qui est la plus proche de cette seconde pièce conductrice. En théorie, la valeur du courant détecté devrait être directement proportionnelle à l'inverse de la distance D séparant la plaque 11 de la surface 5. En pratique toutefois, la valeur du courant détecté est sujette à de nombreux effets parallèles, la courbe i = f(D) étant, en première approximation, telle qu'illustrée à la Fig.3. Les moyens de traitement 21 tiennent compte de la courbe de linéarisation préalablement mesurée à la construction de chaque type de capteur de façon à fournir pour chaque valeur de courant mesurée i la valeur de la distance + séparant les surfaces 3 et 5.

Selon l'invention, il est essentiel que le capteur 7 soit constitué par deux plaques conductrices 9 et 11 reliées électriquement l'une à l'autre. Tel que précédemment indiqué, la plaque 11 la plus proche de la surface 5 est exclusivement utilisée pour effectuer la mesure désirée, le détecteur de courant 19 étant monté en série entre le générateur 17 et ladite plaque 11. De son côté, la plaque 9 a le rôle essentiel de servir de masque à la plaque 11, pour éviter que le courant généré par le signal à haute fréquence entre le capteur 7 et la surface 3 de la première pièce lorsque celli-ci est conductrice, fausse complètement la mesure désirée du courant généré entre la plaque 11 et la surface 5 de la seconde pièce conductrice. Ce rôle de masque explique d'ailleurs pourquoi il est essentiel que les plaques 9 et 11 soient alimentées par un même signal à haute fréquence sous une même tension. Ce rôle explique aussi pourquoi le choix de l'isolant 13 a peu d'importance, pourvu que l'isolation électrique désirée soit obtenue.

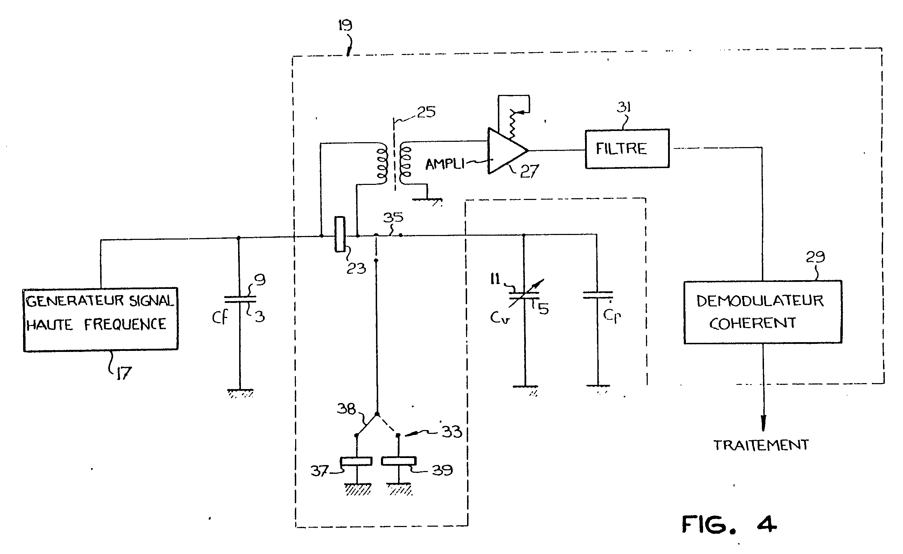

La Fig. 4 montre schématiquement le circuit de mesure, détection et correction de dérive 19 de l'appareil 1 selon l'invention. Dans la Fig. 4, on retrouve le générateur de signal à haute fréquence 17. Le générateur 17 alimente la plaque 9 qui, avec la surface 3 de la première pièce conductrice, forme une capacité fixe Cf. La plaque 11 forme, avec la surface 5 de la seconde pièce conductrice, une capacité variable Cv. Il existe enfin une capacité parasite propre à chaque type de capteur. Cette capacité parasite est désignée par le symbole Cp. Le détecteur de courant 19 comprend une faible impédance 23 montée en série entre le générateur 17 et la plaque 11 du capteur. Le détecteur de courant 19 comprend également un circuit d'isolation relié aux bornes de l'impédance 23 pour mesurer de façon isolée le signal de tension à haute fréquence aux bornes de celle-ci et pour extraire de ce signal ainsi mesuré un signal proportionnel au courant de mesure. Ce circuit peut comprendre un transformteur d'isolation 25 ayant un enroulement primaire connecté aux bornes de l'impédance 23, et un enroulement secondaire relié à une entrée d'un amplificateur à gain ajustable 27. La sortie de l'amplificateur 27 est reliée à une entrée d'un démodulateur cohérent d'amplitude de type connu 29 via un filtre 31. La sortie du démodulateur 29 fournit le signal requis proportionnel au courant de mesure et est reliée aux moyens de traitement appropriés 21 décrits plus en détails ci-après. Pour permettre une correction automatique de dérive de l'appareil, le détecteur 19 peut également incorporer des moyens de vérification 33 pour remplacer momentanément la capacité variable Cv. Les moyens de vérification 33 sont connectables à l'aide d'un commutateur 35 entre l'impédance 23 et la capacité Cv et sont constitués de deux impédances prédéterminées 37 et 39 permettant d'obtenir deux signaux de référence (vérification haute et basse). Ces impédances 37 et 39 sont commutées par un relai 38.

Il convient de mentionner que l'utilisation de tels moyens de vérification 33 est relativement importante dans la mesure où elle permet, avant chaque prise de données, de tenir compte des dérives des amplificateurs ainsi que du générateur, en plus de permettre une détermination facile du gain et des offsets.

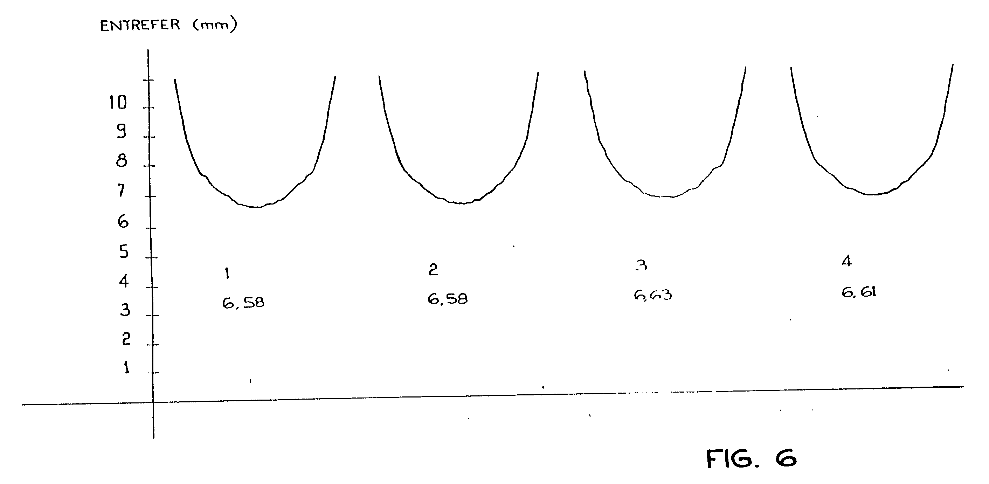

Tel qu'illustré à la Fig. 5, les moyens de traitement sont reliés au détecreur de courant 19.

Selon un premier exemple possible de réalisation, les moyens de traitement 21 peuvent être constitués par un circuit de traitement incluant un microprocesseur 43 dont le but est d'assurer une mémorisation des signaux de courant détectés par le détecteur de courant 19 jusqu'à ce qu'ils soient requis. Lorsque l'information est requise, les signaux peuvent alors être transmis du microprocesseur 43 à un ordinateur 45 qui peut être pourvu de moyens de stockage externes 47, tels que disques ou autres, et de moyens de visualisation 49, tels qu'imprimante ou autres. Dans le cas où plusieurs capteurs 7 sont utilisés, l'ordinateur 45 peut être relié à un microprocesseur 43 associé à chaque capteur 7 de façon à pouvoir traiter individuellement des signaux mémorisés dans chacun des microprocesseurs 43 associés à chacun des capteurs 7. Des lignes pointillées illustrées sur la Fig. 5 montrent, à titre d'exemple, des connexions possibles vers d'autres microprocesseurs 43. L'introduction des données qui fournit la relation courant-distance pour chaque type de capteur est faite une fois pour chaque type de capteur en laboratoire. Tel que précédemment indiqué, il peut être nécessaire d'effectuer une vérification avant chaque prise de données pour tenir compte des dérives de l'amplificateur et du générateur.

Selon un autre exemple possible de réalisation, les moyens de 1 traitement 21 peuvent être constitués par un circuit d'alarme 51. Ce dernier peut être monté à la place du circuit de traitement ou conjointement avec celui-ci. Le but de ce circuit d'alarme 51 est d'immédiatement fournir un signal d'alarme si la valeur du courant détecté correspond à une distance critique prédéterminée. Ce circuit d'alarme 51 peut être connecté en permanence, ce qui le rend très avantageux notamment dans le cas de la surveillance continue et permanente d'une génératrice électrique ou de toute autre machine tournante.

EXEMPLE

Un prototype de l'appareil selon l'invention a été construit et testé par les inventeurs sur une génératrice électrique pour mesurer l'entrefer de celle-ci. Pour ce faire, un capteur à plaques striées a été fabriqué et collé à même le stator de la génératrice sans démonter le rotor de celle-ci. Les spécifications du capteur ainsi installé et les conditions dans lesquelles les essais ont été effectués ont été les suivantes.

Dimensions du capteur (Figs 1 et 2):
hauteur (ou longueur):    h = 200 mm
largeur:    1 = 25 mm
épaisseur:    d = 1 mm
Température maximale:   125°C
Taux d'échantillonnage:   environ 5 500 échantillons/seconde (environ 47 échantillons par pôle, la génératrice étant à 60 Hertz)
Mémoire de données:   environ 30 000 échantillons
Premier mode d'utilisation testé: mémorisation de tous les échantillons (environ 650 pôles)
Deuxième mode d'utilisation testé: mémorisation de l'entrefer minimal pour chaque pôle (environ 30 000 données)

Les essais ont permis d'effectuer une mesure d'une précision globale de l% à pleine échelle sur une plage de la distance d + D d'environ 4 mm à 25 mm, et ce dans des conditions assez différentes de fonctionnement. A ce sujet, il convient de mentionner que les résultats obtenus dans ces différentes conditions de fonctionnement furent directement comparables d'un essai à l'autre grâce à l'utilisation d'une boîte de synchronisation qui a perms de démarrer l'échantillonnage exactement au même endroit sur le rotor. Les essais ainsi effectués ont permis en outre de constarer que les mesures prises n'ont été influencées par aucune des pertbations présentes dans une génératrice telles que les champs magnétiques, l'accélération, etc.

La Fig. 6 est un graphique donnant des résultats obtenus par les inventeurs qui, dans ce cas particulier, se sont intéressés à la forme des pôles par rapport à un point du stator.

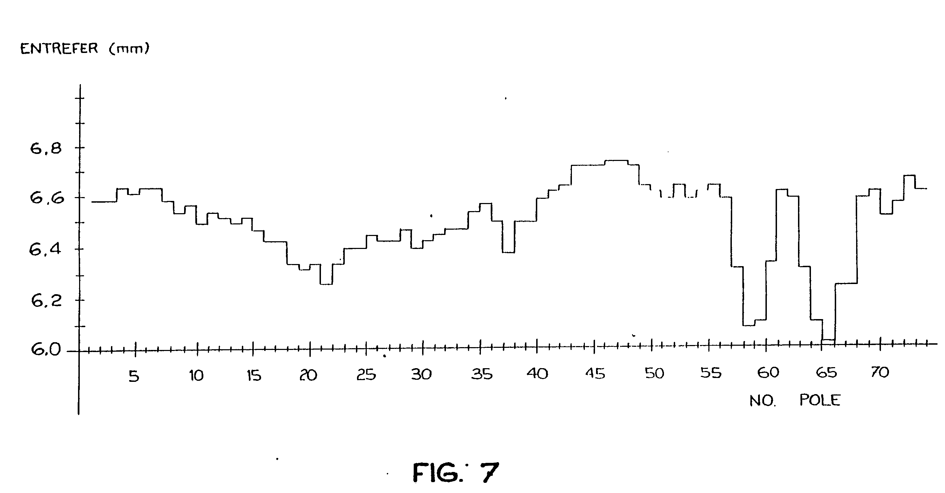

La Fig. 7 est un graphique donnant également des résultats obtenus par les inventeurs. Ce graphique donne la distance minimale séparant un point du stator des 74 pôles du rotor de la génératrice en fonctionnement sur laquelle l'appareil a été testé.

**Revendications**

1. Appareil (1) de mesure dynamique et sans contact de la distance (d + D) séparant la surface (3) d'une première pièce de la surface (5) d'au moins une seconde pièce conductrice faiblement espacée de la première, caractérisé en ce qu'il comprend:
- au moins un capteur (7) constitué par deux plaques conductrices parallèles (9, 11), superposées et isolées électriquement l'une de l'autre, ledit capteur (7) étant positionné à même la surface (3) de la première pièce de façon à ce que les deux plaques (9, 11) soient parallèles à ladite surface (3) et isolées électriquement de celle-ci;
- des moyens (17) pour alimenter les deux plaques (9, 11) de chaque capteur (7) avec un même signal à haute fréquence sous une même tension;
- des moyens (19) pour détecter le courant généré (i) par ledit signal à haute fréquence entre la plaque (11) de chaque capteur (7) la plus proche de la surface (5) de la seconde pièce conductrice et cette dernière, le courant détecté (i) variant en fonction inverse de la distance (D) séparant la surface (5) de la seconde pièce conductrice de la surface de la plaque (11) du capteur (7) qui est la plus proche de cette seconde pièce conductrice; et,
- des moyens de traitement (21) pour déterminer la valeur de la distance (d + D) séparant la première pièce de la seconde pièce conductrice en fonction de la valeur du courant détecté (i).

2. Appareil selon la revendication 1, caractérisé en ce que le signal à haute fréquence transmis à chaque capteur (7) a une fréquence comprise entre 100 kHz et 10 MHz.

3. Appareil selon la revendication 1 ou 2, caractérisé en ce que la tension à laquelle sont soumises les deux plaques (9,11) est comprise entre 5 et 100 volts.

4. Appareil selon l'une quelconque des revendications 1 à 3, caractérisé en ce que les moyens pour détecter le courant généré par le signal à haute fréquence (19) comprennent:
- une faible impédance (23) montée en série entre les moyens pour alimenter (17) et la plaque (11) du capteur (7) la plus proche de la seconde pièce conductrice (5); et
- un circuit d'isolation (25,27,31,29) relié à la faible impédance (23) pour mesurer de façon isolée le signal de tension à haute fréquence aux bornes de celle-ci et extraire de ce signal mesure un signal proportionnel au courant de mesure.

5. Appareil selon la revendication 4, caractérisé en ce que le circuit d'isolation (25, 27, 31, 29) comprend:
- un transformteur d'isolation (25) relié, d'un côté, aux bornes de la faible impédance (23) et, de l'autre côté, à un amplificateur (27); et
- un démodulateur d'amplitude (29) pour traiter le signal de sortie de l'amplificateur (27).

6. Appareil selon la revendication 5, caractérisé en ce que l'amplificateur (27) est à gain ajustable et en ce qu'un filtre (31) est interconnecté entre la sortie de l'amplificateur (27) et le démodulateur d'amplitude (29).

7. Appareil selon l'une quelconque des revendications 1 à 6, caractérisé en ce que les moyens pour détecter le courant (19) comprennent en outre des moyens de vérification (33) remplaçant sélectivement la capacité (Cv) formée par la plaque (11) du capteur (7) la plus proche de la surface (5) de la seconde pièce et cette dernière pour fournir des signaux de référence.

8. Appareil selon l'une quelconque des revendications 1 à 7, caractérisé en ce que les moyens de traitement (21) comprennent un ordinateur (45) préprogrammé en fonction de divers paramètres physiques de chaque capteur (7), pour déterminer la valeur de la distance réelle correspondant à la valeur du signal de courant détecté par chaque capteur (7) tout en tenant compte des effets parasites qui sont propres à chaque capteur et peuvent affecter la valeur dudit signal de courant ainsi détecté.

9. Appareil selon la revendication 8, caractérisé en ce que les moyens de traitement (21) comprennent également un microprocesseur (43) monté entre les moyens pour détecter le courant de chaque capteur (19) et l'ordinateur (45) pour mémoriser les signaux de courant détectés jusqu'à ce qu'ils soient fournis à l'ordinateur (45).

10. Appareil selon la revendication 9, caractérisé en ce que les moyens de traitement (21) comprennent en outre un circuit d'alarme (51) relié aux moyens pour détecter le courant de chaque capteur (19), associé au microprocesseur (43), pour immédiatement fournir un signal d'alarme si la valeur du courant détecté correspond a une distance critique prédéterminée.

11. Appareil selon l'une quelconque des revendications 8 à 10, caractérisé en ce que les moyens de traitement (21) comprennent en outre des moyens (47) pour stocker des valeurs déterminées, telles que paramètres, pour l'ordinateur (45), et des moyens (49) pour visualiser lesdites valeurs déterminées de l'ordinateur (45).

12. Appareil selon l'une quelconque des revendications 1 à 7, caractérisé en ce que les moyens de traitement (21) sont constitués par un circuit d'alarme (51) pour immédiatement fournir un signal d'alarme si la valeur du courant détecté correspond à une distance critique prédéterminée.

13. Appareil selon l'une quelconque des revendications 1 à 12, caractérisé en ce qu'il comprend un seul capteur (7).

14. Appareil selon l'une quelconque des revendications 1 à 13, caractérisé en ce qu'il comprend au moins deux capteurs (7) espacés l'un de l'autre sur la première pièce (3).

15. Appareil selon l'une quelconque des revendications 1 à 14, caractérisé en ce que lesdites première et seconde pièces (3,5) sont le stator et le rotor d'une génératrice électrique, la distance mesurée (d + D) étant celle de l'entrefer de ladite génératrice, et en ce que la surface (15) des plaques (9,11) de chaque capteur (7) est striée pour réduire au maximum la génération de courant de Foucalt.

16. Appareil selon l'une quelconque des revendications 1 à 15, caractérisé en ce que le signal à haute fréquence utilisé est un signal de 455 kHz sous une tension de 10 volts crête à crête.

17. Procédé de mesure dynamique et sans contact de la distance (d + D) séparant la surface (3) d'une première pièce de la surface (5) d'au moins une seconde pièce conductrice faiblement espacée de la première, caractérisé en ce que:
- on positionne à même la surface (3) de la première pièce au moins un capteur (7) constitué par deux plaques conductrices parallèles (9, 11), superposées et isolées électriquement l'une de l'autre, lesdites plaques (9, 11) étant en outre parallèles à ladite surface (3) de la première pièce et isolées électriquement de celle-ci.
- on alimente les deux plaques (9, 11) de chaque capteur (7) avec un même signal à haute fréquence sous une même tension;
- on détecte le courant généré (i) par ledit signal à haute fréquence entre la plaque (11) de chaque capteur (7) la plus proche de la surface (5) de la seconde pièce conductrice et cette dernière, le courant détecté variant en fonction inverse de la distance (D) séparant la surface (5) de la seconde pièce conductrice de la surface de la plaque (11) du capteur (7) qui est la plus proche de cette seconde pièce conductrice;
- on détermine la valeur de la distance (d + D) séparant la première pièce de la seconde pièce conductrice en fonction de la valeur du courant détecté (i).

18. Procédé selon la revendication 17, caractérisé en ce que l'alimentation des deux plaques (9, 11) est effectuée avec un signal dont la fréquence est comprise entre 100 kHz et 10 MHz sous une tension comprise entre 5 et 100 volts.

19. Procédé selon la revendication 17 ou 18, caractérisé en ce que la détection du courant est effectuée en mesurant de façon isolée le signal de tension à haute fréquence aux bornes d'une faible impédance (23) montée en série entre des moyens d'alimentation du signal à haute fréquence (17) et la Plaque (11) du capteur (7) la plus proche de la seconde pièce conductrice (5), et en extrayant de ce signal mesuré un signal proportionnel au courant de mesure.

20. Procédé selon l'une quelconque des revendications 17 à 19, caractérisé en ce que la détermination de la valeur de la distance (d + D) séparant les première et seconde pièces conductrices (3,5) en fonction de la valeur du courant détecté est effectuée par l'intermédiaire d'un ordinateur (45) préprogrammé en fonction de divers paramètres physiques de chaque capteur (7), por déterminer la valeur de la distance réelle correspondant à la valeur du signal de courant détecté par chaque capteur (7) tout en tenant compte de effets parasites qui sont propres à chaque capteur et peuvent affecter la valeur dudit signal de courant ainsi détecté.

21. Procédé selon l'une quelconque des revendications 17 à 20, caractérisé en ce qu'avant d'effectuer chaque détection de courant, on remplace la capacité (Cv) fournie par la plaque (11) du capteur (7) la plus proche de la surface (5) de la seconde pièce et cette dernière pour fournir des signaux de référence de mesure.

22. Procédé selon l'une quelconque des revendications 17 à 21, caractérisé en ce que:
- lesdites première et seconde pièces (3,5) sont le stator et le rotor d'une génératrice électrique, la distance mesurée (d + D) étant celle de l'entrefer de ladite génératrice, et en ce que la surface (15) des plaques (9,11) de chaque capteur (7) est striée pour réduire au maximum la génération de courant de Foucault.

23. Procédé selon l'une quelconque des revendications 17 à 21, caractérisé en ce que le signal à haute fréquence utilisé est un signal de 455 kHz sous une tension de 10 volts crête à crête.

**Patentansprüche**

1. Vorrichtung (1) zur berührungslosen, dynamischen Messung des Abstandes (d + D) zwischen der Oberfläche (3) eines ersten Bauteiles und der Oberfläche (5) wenigstens eines zweiten, leitfähigen Bauteils, welches vom ersten Bauteil nur wenig beabstandet ist, gekennzeichnet durch wenigstens einen Fühler (7), der zwei leitfähige, parallele, übereinander angeordnete und gegeneinander elektrisch isolierte Platten (9, 11) aufweist, wobei der Fühler (7) direkt derart auf der Oberfläche (3) des ersten Bauteils positioniert ist, daß die beiden Platten (9, 11) sich zu der Oberfläche (3) parallel erstrecken und zu dieser isoliert sind; durch Mittel (17) zur Versorgung der zwei Platten (9, 11) jedes Fühlers (7) mit einem gleichen hochfrequenten Signal unter gleicher Spannung; durch Mittel (19) zur Erfassung des Stromes (i), der durch das hochfrequenten Signal zwischen der der Oberfläche (5) des zweiten leitfähigen Bauteils benachbartetsten platte (11) jedes Fühlers (7) und dem letztgenannten Bauteil erzeugt ist, wobei der erfaßte Strom (i) nach einer inversen Funktion mit dem Abstand (D) zwischen der Oberfläche (5) des zweiten leitfähigen Bauteils und der dem zweiten leitfähigen Bauteil benachbartetsten Oberfläche der Platte (11) des Fühlers (7) variiert; und durch Verarbeitungsmittel (21) zur Bestimmung der Größe des Abstandes (d + D) zwischen dem ersten Bauteil und dem leitfähigen zweiten Bauteil als Funktion der Größe des erfaßten Stromes (i).

2. Vorrichtung nach Anspruch 1, dadurch gekennzeichnet, daß das jedem Fühler (7) zugeführte hochfrequente Signal eine Frequenz zwischen 100 kHz und 10 MHz besitzt.

3. Vorrichtung nach Anspruch 1 oder 2, dadurch gekennzeichnet, daß die an die beiden platten (9, 11) gelegte Spannung zwischen 5 Volt und 100 Volt liegt.

4. Vorrichtung nach einem der Ansprüche 1 bis 3, dadurch gekennzeichnet, daß die Mittel zur Erfassung des von dem hochfrequenten Signal (19) erzeugten Stromes eine schwache Impedanz (23), die zwischen die Mittel zur Versorgung (17) und die dem zweiten leitfähigen Bauteil (5) benachbartetste Platte (11) des Fühlers (7) in Reihe geschaltet ist, sowie eine an die Impedanz (23) angeschlossene Trennschaltung (25, 27, 31, 29) zur isolierten Messung des hochfrequenten Spannungssignals an den Anschlüssen der Impedanz und zur Extrahierung eines dem Meßstrom proportionalen Signals aus diesem Meßsignal aufweisen.

5. Vorrichtung nach Anspruch 4, dadurch gekennzeichnet, daß die Trennschaltung (25, 27, 31, 29) einen Trenntransformator (25), der an einer Seite mit der Anschlüssen der Impedanz (23) und an der anderen Seite mit einem Verstärker (27) verbunden ist, sowie einen Amplituden-Demodulator (29) zur Verarbeitung des am Ausgang des Verstärkers (27) auftretenden Signals aufweist.

6. Vorrichtung nach Anspruch 5, dadurch gekennzeichnet, daß der Verstärkungsgrad des Verstärkers (27) einstellbar ist, und daß zwischen den Ausgang des Verstärkers (27) und den Amplituden Demodulator (29) ein Filter (31) zwischengeschaltet ist.

7. Vorrichtung nach einem der Ansprüche 1 bis 6, dadurch gekennzeichnet, daß die Mittel zur Erfassung des Stromes (19) desweiteren Mittel zur Prüfung (33) aufweisen, die wahlweise die durch die der Oberfläche (5) des zweiten Bauteils benachbartetste Platte (11) des Fühlers (7) und das zweite Bauteil gebildete Kapazität (Cv) zur Bereitstellung von Referenzsignalen ersetzt.

8. Vorrichtung nach einem der Ansprüche 1 bis 7, dadurch gekennzeichnet, daß die Verarbeitungsmittel (21) einen entsprechend den verschiedenen körperlichen Parametern jedes Fühlers (7) vorprogrammierten Rechner (45) zur Bestimmung der Größe des realen Abstandes entsprechend der Größe des von jedem Fühler (7) erfaßten Stromsignals und unter der Berücksichtigung der parasitären Effekte, die jedem Fühler eigen sind und den Wert des so erfaßten Stromsignals beeinflussen können aufweisen.

9. Vorrichtung nach Anspruch 8, dadurch gekennzeichnet, daß die Verarbeitungsmittel (21) auch einen Mikroprozeßor (43) aufweisen, der zwischen den Mitteln (19) zum Erfassen des Stromes jedes Fühlers (7) und den Rechner (45) befestigt ist, um die erfaßten Stromsignale bis zu deren Weiterleitung an den Rechner (45) zu speichern.

10. Vorrichtung nach Anspruch 9, dadurch gekennzeichnet, daß die Verarbeitungsmittel (21) ferner eine Alarmschaltung (51) aufweisen, die mit den Mitteln zur Erfassung des Stromes jedes dem Mikroprozeßor (43) zugeordneten Fühlers (19) zur sofortigen Lieferung eines Alarmsignals verbunden sind, wenn der Wert des erfaßten Stromes einem vorbestimmten kritischen Abstand entspricht.

11. Vorrichtung nach einem der Ansprüche 8 bis 10, dadurch gekennzeichnet, daß die Verarbeitungsmittel (21) ferner Mittel (47) zum Speichern vorgestimmter Werte, wie etwa Parameter, für den Rechner (45) sowie Mittel (49) zur Anzeige der vorbestimmten Werte des Rechners (45) aufweisen.

12. Vorrichtung nach einem der Ansprüche 1 bis 7, dadurch gekennzeichnet, daß die Verarbeitungsmittel (21) eine Alarmschaltung (51) zur sofortigen Lieferung eines Alarmsignals aufweisen, wenn die Größe des erfaßten Stromes einem vorbestimmten kritischen Abstand entspricht.

13. Vorrichtung nach einem der Ansprüche 1 bis 12, dadurch gekennzeichnet, daß ein einziger Fühler (7) vorgesehen ist.

14. Vorrichtung nach einem der Ansprüche 1 bis 13, dadurch gekennzeichnet, daß wenigstens zwei Fühler (7) vorgesehen sind, welche auf dem ersten Bauteil (3) beabstandet sind.

15. Vorrichtung nach einem der Ansprüche 1 bis 14, dadurch gekennzeichnet, daß die ersten und zweiten Bauteile (3, 5) der Stator und der Rotor eines elektrischen Generators sind und daß der gemessene Abstand (d + D) der Luftspalt des Generators ist, und daß die Oberfläche (15) der Platten (9, 11) jedes Fühlers (7) zur maximalen Reduzierung einer Foucault-Stromerzeugung gerillt ist.

16. Vorrichtung nach einem der Ansprüche 1 bis 15, dadurch gekennzeichnet, daß das benutzte hochfrequente Signal eine Frequenz von 455 kHz sowie eine Spitze-Spitze-Spannung von 10 Volt besitzt.

17. Verfahren zur berührungslosen dynamischen Messung des Abstandes (d + D) zwischen der Oberfläche (3) eines ersten Bauteils und der Oberfläche (5) wenigstens eines zweiten, leitfähigen Bauteils, welches vom ersten Bauteil nur wenig beabstandet ist, dadurch gekennzeichnet, daß wenigstens ein Fühler (7) direkt auf der Oberfläche (3) des ersten Bauteils positioniert wird, welcher zwei leitfähige, parallele, übereinander angeordnete und gegeneinander elektrisch isolierte platten (9, 11) aufweist, welche sich außerdem parallel zu der Oberfläche (3) des ersten Bauteils erstrecken und gegenüber diesem elektrisch isoliert sind; daß die beiden Platten (9, 11) jedes Fühlers (7) mit dem gleichen hochfrequenten Signal unter gleicher Spannung versorgt werden; daß ein von dem hochfrequenten Signal zwischen der der Oberfläche (5) des zweiten leitfähigen Bauteils benachbartetsten Platte (11) jedes Fühlers (7) und dem zweiten Bauteil erzeugte Strom (i) erfaßt wird, wobei der erfaßte Strom nach einer inversen Funktion mit dem Abstand (D) zwischen der Oberfläche (5) des zweiten leitfähigen Bauteils und der Oberfläche der Platte (11) des Fühlers (7) variiert, die zu dem zweiten leitfähigen Bauteil am nächsten liegt; und daß die Größe des Abstandes (d + D) zwischen dem ersten Bauteil und dem leitfähigen Bauteil in Abhängigkeit vom Wert des erfaßten Stromes (i) bestimmt wird.

18. Verfahren nach Anspruch 17, dadurch gekennzeichnet, daß die Versorgung der beidenplatten (9, 11) mittels eines Signals durchgeführt wird, dessen Frequenz zwischen 100 kHz und 10 MHz liegt unter einer Spannung zwischen 5 Volt und 100 Volt.

19. Verfahren nach Anspruch 17 oder 18, dadurch gekennzeichnet, daß die Erfassung des Stromes durch isolierte Messung des hochfrequenten Spannungssignals an den Anschlüssen einer schwachen Impedanz (23) durchgeführt wird, die zwischen die Mittel zur Versorgung mit dem hochfrequenten Signal und der dem zweiten leitfähigen Bauteil (5) am nächsten liegenden Platte (11) des Fühlers (7) in Reihe geschaltet ist, und daß aus dem gemessenen Signal ein dem gemessenen Strom proportionales Signal extrahiert wird.

20. Verfahren nach einem der Ansprüche 17 bis 19, dadurch gekennzeichnet, daß die Bestimmung der Größe des Abstandes (d + D) zwischen dem ersten und dem zweiten leitfähigen Bauteil (3, 5) in Abhängigkeit vom Wert des erfaßten Stromes mit Hilfe eines Rechners (45) durchgeführt wird, der in Funktion yerschiedener körperlicher Parameter jedes Fühlers (7) vorprogrammiert ist, um den Wert des realen Abstandes entsprechend dem Wert des von jedem Fühler (7) erfaßten Stromsignals zu bestimmen, und zwar unter Berücksichtigung der parasitären Effekte, die jedem Fühler eigen sind und den Wert des so erfaßten Stromsignals beeinflussen können.

21. Verfahren nach einem der Ansprüche 17 bis 20, dadurch gekennzeichnet, daß vor jeder Erfassung des Stromes die Kapazität (Cv), die durch die der Oberfläche (5) der dem zweiten Bauteils am nächsten liegenden Platte (11) des Fühlers (7) und dem zweiten Bauteil gebildet wird, zur Lieferung von Meß-Referenzsignalen ersetzt wird.

22. Verfahren nach einem der Ansprüche 17 bis 21, dadurch gekennzeichnet, daß das erste und das zweite Bauteile (3, 5) vom Stator und Rotor eines elektrischen Generators gebildet sind, daß der gemessene Abstand (d + D) derjenige des Luftspaltes des Generators ist, und daß die Oberfläche (15) der Platten (9, 11) jedes Fühlers (7) gerillt ist, um die Erzeugung von Foucault-Strom maximal zu reduzieren.

23. Verfahren nach einem der Ansprüche 17 bis 21, dadurch gekennzeichet, daß als Hofrequenzsignal eine Frequenz von 455 kHz und eine Spitze-Spitze-Spannung von 10 Volt gewählt werden.

**Claims**

1. Apparatus (1) for the dynamic and non-contact measurement of the distance (d + D) separating the surface (3) of a first part from the surface (5) of at least one second conductive part closely spaced from said first part, characterized in that it comprises:
- at least one sensor (7) including two parallel, superimposed conductive plates (9, 11) electrically insulated from one another, said sensor (7) being positioned on the very surface (3) of said first part in such a way that the said two plates (9, 11) be parallel to the said surface (3) and electrically insulated therefrom:
- means (17) for feeding said two plates (9, 11) of each sensor (7) with a same high frequency signal under the same voltage;
- means (19) for measuring the current (i) generated by the said high frequency signal between the plate (11) of each sensor (7) which is closest to the surface (5) of the second conductive part, and the said second conductive part; said measured current (i) varying as an inverse function of the distance (D) separating the surface (5) of said second conductive part from the surface of the plate (11) of said sensor (7) which is closest to said second conductive part, and
- processing means (21) for determining the value of the distance (d + D) separating said first part from said second conductive part as a function of the value of said measured current (i).

2. Apparatus according to claim 1, characterized in that the high frequency signal fed to each sensor (7) has a frequency comprised between 100 kHz and 10 MHz.

3. Apparatus according to claim 1 or 2, characterized in that said voltage applied across said two plates (9, 11) is comprised between 5 and 100 volts.

4. Apparatus according to any one of claims 1 to 3, characterized in that said means for measuring the current generated by said high frequency current (19) comprises:
- a low impedance (23) mounted in series between said means (17) for feeding said high frequency signal and the plate (11) of said sensor (7) which is closest to said second conductive part (5); and
- an insulating circuit (25, 27, 31, 29) connected to said low impedance (23) for measuring in an insulated manner, the high frequency voltage signal at the terminals of the low impedance and extracting from said measured signal, a signal proportional to the detected current.

5. Apparatus according to claim 4, characterized in that the insulating circuit (25, 27, 31, 29) comprises:
- an insulating transformer (25) connected, on the one side, to the terminals of said low impedance (23) and, on the other side, to an amplifier (27), and
- an amplitude demodulator (29) for demodulating the output signal of the amplifier (27).

6. Apparatus according to claim 5, characterized in that the amplifier (27) is an adjustable gain amplifier and in that a filter (31) is interconnected between the output of the amplifier (27) and the amplitude demodulator (29).

7. Apparatus according to any one of claims 1 to 6, characterized in that the current measuring means (19) further comprises calibration means (33) to selectively replace the variable condensor (Cv) formed by the plate (11) of the sensor (7), which is the closest to the surface (5) of the second part and said second part to provide reference signals.

8. Apparatus according to any one of claims 1 to 7, characterized in that the processing means (21) comprises a computer (45) pre-programmed as a function of the various physical parameters of each sensor (7), for determining the value of the actual distance corresponding to the value of the measured current signal for each sensor (7) while taking into account parasitic effects which are proper to said sensor and which may affect the value of the said current signal thus measured.

9. Apparatus according to claim 8, characterized in that the processing means (21) further comprises a micro-processor (43) connected between the current detecting means (19) of each sensor and the computer (45) for storing measured and conditioned current signals until they are supplied to the computer (45).

10. Apparatus according to claim 9, characterized in that the processing means (21) further comprise an alarm circuit (51) connected to the current measuring means of each sensor (19) in parallel to the micro-processor (43) associated with said sensor (19) to immediately give an alarm signal if the value of the measured current corresponds to a predetermined critical value.

11. Apparatus according to any one of claims 8 to 10 characterized in that the processing means (21) further comprise means (47) for storing determined values such as parameters of operation, for the computer (45) and means (49) for visualizing the said determined values of the computer (45).

12. Apparatus according to any one of claims 1 to 7, characterized in that the processing means (21) comprise an alarm circuit (51) to immediately give an alarm signal if the value of the measured current corresponds to a predetermined critical value.

13. Apparatus according to any one of claims 1 to 12, characterized in that it comprises a single sensor (7).

14. Apparatus according to any one of claims 1 to 13, characterized in that it comprises at least two sensors (7) spaced one from the other on said first conductor part (3).

15. Apparatus according to any one of claims 1 to 14 characterized in that said first and second conductive parts (3, 5) are the stator and rotor of an electric generator, the measured distance (d + D) being that of the air gap of said generator; and in that the surface (15) of the plates (9, 11) of each sensor (7) is grooved to reduce the production of eddy currents.

16. Apparatus according to any one of claims 1 to 15 characterized in that the high frequency signal that is used is 455 kHz signal under a peak-to-peak voltage equal to 10 v.

17. Method for the dynamic and non-contact measurement of the distance (d + D) separating the surface (3) of a first part from the surface (5) of at least one second conductive part closely spaced from said part, characterized by the steps of:

- positioning on the surface (3) of said first conductive part, at least one sensor (7) including two parallel, superimposed conductive plates (9, 11) electrically insulated from one another, said plates (9, 11) being further parallel to said surface (3) of said first part and electrically insulated therefrom;

- feeding said two plates (9, 11) of each sensor (7) with a same high frequency signal under the same voltage;

- measuring the current (i) generated by the said high frequency signal between the plate (11) of each sensor (7), which is the closest to the surface (5) of the second conductive part and said second conductive part, the measured current varying as an inverse function of the distance (D) separating the surface (5) of the second conductive part from the surface of the plate (11) of the sensor (7), which is closest to said second conductive part; and

- determining the value of the distance (d + D) separating the first part from the second conductive part as a function of the value of the measured current (i).

18. Method according to claim 17, characterized in that said two plates (9, 11) are fed with a signal of which the frequency is comprised between 100 kHz and 10 MHz under a voltage comprised between 5 and 100 volts.

19. Method according to claim 17 or 18, characterized in that the current measurement is carried out by measuring in an insulated manner the high frequency voltage signal generated at the terminals of a low impedance (23) connected in series between the means (17) feeding the high frequency signal and the plate (11) of the sensor (7), which is the closest to the second conductive part (5), and by extraction from said measured signal a signal proportional to the detected current.

20. Method according to any one of claims 17 to 19, characterized in that the determination of the value of the distance (d + D) separating the first and second conductive parts (3, 5) as a function of the value of the measured current is carried out by means of a computer (45) pre-programmed as a function of the various physical parameters of each sensor (7), to determine the value of the actual distance corresponding to the value of the current signal measured by each sensor (7) while taking into account parasitic effects which are proper to said sensor and which may affect the value of the said current signal thus measured.

21. Method according to any one of claims 17 to 20, characterized in that, prior to making each current measurement, the variable condensor (Cv) formed by the plate (11) of the sensor (7) which is the closest to the surface (5) of the second part, and said second part is replaced in order to provide reference signals.

22. Method according to any one of claims 17 to 21 characterized in that:

- the first and second conductive parts (3, 5) are the stator and the rotor of an electric generator, the distance (d + D) measured being that of the air gap of the said generator; and in that the surface (15) of the plates (9, 11) of each sensor (7) is grooved to reduce the production of eddy currents.

23. Method according to any one of claims 17 to 21, characterized in that the high frequency signal that is used is a 455 kHz signal under a peak-to-peak voltage of 10 volts.

# FIG. 1

GENERATEUR DE
SIGNAL HAUTE
FREQUENCE

DETECTEUR
DE COURANT

TRAITEMENT

# FIG. 2

$i$

FIG. 3

$D$

FIG. 5

7

17

GENERA·
TEUR

19

DETECTEUR
DE COURANT

43

MICRO-
PROCESSEUR

45

ORDINATEUR

CIRCUIT
ALARME

STOCKAGE

IMPRIMANTE

21

51

47

49

FIG. 4

0 147 294

ENTREFER (mm)

10
9
8
7
6
5
4
3
2
1

1
6,58

2
6,58

3
6,63

4
6,61

FIG. 6

0 147 294

FIG. 7

ENTREFER (mm)

NO. POLE

0 147 294